# EUROPEAN PATENT APPLICATION

(11) **EP 1 750 358 A2**
(43) Date of publication of application: **07.02.2007**
(21) Application number: 06016375.5
(22) Date of filing: 04.08.2006
(51) Int. Cl.: H02K 21/24, B60K 7/00

(54) **Rotary electrical machine**

(30) Priority: 05.08.2005 JP 2005228943; 03.03.2006 JP 2006058662
(71) Applicant: YAMAHA HATSUDOKI KABUSHIKI KAISHA, Iwata-shi, Shizuoka-ken 438-8501 (JP)
(72) Inventor: Nakajima, Masumi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a rotary electrical machine comprising a rotor attached to a rotary member which is rotatable about an axis, in such a manner that the rotor is not allowed to rotate relative to the rotary member at least about the axis, and is rotating together with the rotary member about the axis, and a stator opposing the rotor in a direction of the axis, and being attached to a fixed member in such a manner that the stator is not allowed to rotate relative to the fixed member at least about the axis, wherein either one of the rotor or the stator is attached to the rotary member or the fixed member in such a manner that the rotor or the stator is not allowed to move in the direction of the axis and the respective other is allowed to move in the direction of the axis, wherein the stator has a support section supporting the rotor in such a manner that a spacing distance between the stator and the rotor is fixed.

## Description

The present invention relates to a rotary electrical machine, an engine to which the rotary electrical machine is attached and a vehicle to which the rotary electrical machine is mounted, and more particularly relates to an attaching structure of a rotary electrical machine and to an engine and a vehicle to which a rotary electrical machine is attached by the attaching structure of a rotary electrical machine.

Conventionally, some straddle type vehicles such as, for example, motorcycles are developed to incorporate a rotary electrical machine that can assist the power of an engine or can run a vehicle by its own power (for example, see JP-A-2000-013913). One of such rotary electrical machines used for a straddle type vehicle is an axial gap type rotary electrical machine, i.e., a rotary electrical machine in which a rotor and a stator are spaced apart from each other in an axial direction. The axial gap type rotary electrical machine includes a disk-like rotor to which magnets for generating the field magnet are joined and a stator opposing the rotor in the axial direction of a rotational shaft and having coils wound therearound. In general, the rotor is attached to a rotational shaft itself, or to a rotational member, such as a flywheel, fixed to the rotational shaft so as to rotate together with the rotational shaft. In turn, the stator is fixed to a fixed member, such as a case. For another example of the axial gap type rotary electrical machine, there is a machine which is proposed and has a mechanism that changes positions of the rotor and the stator relative to each other to vary the output characteristics, while the stator is fixed to a fixed member (for example, see International Publication No. 2004/088826, pamphlet).

The output characteristics of such an axial gap type rotary electrical machine are greatly affected by a spacing distance between the rotor and the stator. That is, the spacing distance between the rotor and the stator greatly acts upon an amount of magnetic fluxes generated between field magnets of the rotor and the stator, and greatly affects the maximum rotational speed and the maximum torque of the rotary electrical machine.

Therefore, the spacing distance between the rotor and the stator needs to be accurately set in an assembling process or the like.

Meanwhile, in the conventional rotary electrical machines, the rotor and the stator are fixed to the rotary member and the fixed member, respectively. Thus, the spacing distance between the field magnets of the rotor and the stator is affected by configurations of the fixed member and positions of the rotary member, and it is difficult to accurately set the spacing distance. Also, in the rotary electrical machine in which the positions of the rotor and the stator are changed relative to each other, it is difficult to accurately set the spacing distance between the rotor and the stator because the rotor rotates at a high speed.

The present invention is made in view of the problems discussed above, and aims to provide a rotary electrical machine of which spacing distance between field magnets of a rotor and a stator can be accurately and easily set, and also provide an engine and a vehicle to which the rotary electrical machine is attached.

This objective is solved in an inventive manner by a rotary electrical machine comprising a rotor attached to a rotary member which is rotatable about an axis, in such a manner that the rotor is not allowed to rotate relative to the rotary member at least about the axis, and is rotating together with the rotary member about the axis, and a stator opposing the rotor in a direction of the axis, and being attached to a fixed member in such a manner that the stator is not allowed to rotate relative to the fixed member at least about the axis, wherein either one of the rotor or the stator is attached to the rotary member or the fixed member in such a manner that the rotor or the stator is not allowed to move in the direction of the axis and the respective other is allowed to move in the direction of the axis, wherein the stator has a support section supporting the rotor in such a manner that a spacing distance between the stator and the rotor is fixed.

Preferably, an opposing surface of the stator opposing the rotor has a circularly formed magnetic flux generating area in which a means for generating magnetic fluxes is embedded, wherein the stator has the support section supporting the rotor in such a manner that the spacing distance between an opposing surface of the rotor opposing the magnetic flux generating area and the magnetic flux generating area is fixed.

Further, preferably the respective other of the rotor and the stator is attached to the rotary member or the fixed member in such a manner that the respective other of the rotor and the stator is allowed to move in the direction of the axis by a slide means, and the slide means includes an engaging section formed on the rotary member or the fixed member and extending in the direction of the axis, and an engaged section formed on the rotor or the stator and engaged with the engaging section to slide along the engaging section in the direction of the axis.

Yet further, preferably the support section of the stator directly or indirectly abuts the rotor to support the rotor for pivotal movement. Therein, the support section of the stator may support the rotor for pivotal movement via a bearing.

Yet further still, preferably the stator has the opposing surface having the magnetic flux generating area and has a rotor opposing section which opposes the rotor and has a circularly shaped cross section, and the support section is formed in an inner circumferential surface or an outer circumferential surface of the rotor opposing section.

Preferably, at least one of the support section of the stator and the engaged section of the rotor abutting the bearing is made of a resin material.

Further, preferably the rotary member is either a crankshaft, a flywheel, a clutch housing or a sheave of a continuously variable transmission, and wherein the fixed member is either a cover covering the rotary electrical machine, a crankcase, or a transmission case covering a power transmission mechanism from an engine to a rear wheel.

Still further, preferably either one of the rotor or the stator has the field magnets and the respective other of them has the coils.

According to an embodiment, the rotary electrical machine includes the rotor attached to a flywheel, which is rotatable about an axis of a crankshaft, in such a manner that the rotor is not allowed to rotate relative to the flywheel about the axis, and the stator opposing the rotor and attached to a case cover in such a manner that the stator is not allowed to rotate relative to the case cover about the axis, wherein either one of the rotor or the stator is attached to the flywheel or the case cover, in such a manner that the rotor or the stator is not allowed to move in the direction of the axis and the rest is allowed to move in the direction of the axis, and wherein the stator has a support section supporting the rotor in such a manner that the spacing distance between the stator and the rotor is fixed.

This objective is also solved by an engine coupled with the rotary electrical machine according to one of the above embodiments.

This objective is further solved by a vehicle including the rotary electrical machine according to one of the above embodiments.

In the following, the present invention is explained in greater detail with respect to several embodiments thereof in conjunction with the accompanying drawings, wherein:
- FIG. 1: is a side elevational view of a motorcycle incorporating a rotary electrical machine configured in accordance with an embodiment,
- FIG. 2: is a side elevational view of a rear portion of the motorcycle,
- FIG. 3: is a cross sectional view taken along the line III-III of FIG. 2,
- FIG. 4: is an enlarged view of FIG. 3,
- FIG. 5: is an illustration showing a state in which a rotor of the rotary electrical machine slides relative to a flywheel,
- FIG. 6: is a schematically illustrated perspective exploded view of the rotary electrical machine,
- FIG. 7: includes illustrations showing states in which a movable stator of the rotary electrical machine rotates relative to a fixed stator,
- FIG. 8: is a cross sectional view of a rotary electrical machine configured in accordance with another embodiment, and
- FIG. 9: is an enlarged view of FIG. 8,

### Description of Reference Numerals:

1: motorcycle
3: front wheel
5: front fork
7: steering shaft
9: handlebar
11: grip
13: seat
15: rear suspension
16: rear arm
17: rear wheel
19: case cover
20: rotary electrical machine
21: rotor
22: yoke
23: field magnet
30: fixed stator
31: coil
32: rotor opposing section
34: fixed tooth
36a: inner circumferential section of fixed stator
36b: outer circumferential section of fixed stator
37: lock portion
40: movable stator
41: movable tooth
42: base
43: resin section
50: engine
51: crankshaft
52: bearing
53: bearing containing oil
54: seal member
55: one-way clutch
56: flywheel
57: nut
59: bolt hole
60: self-starting motor
61: starter reduction motor
62: gear
63: bearing
64: bearing
65: engaging member
66: motor
70: rotor
71: yoke

An embodiment will be described below based upon drawings.

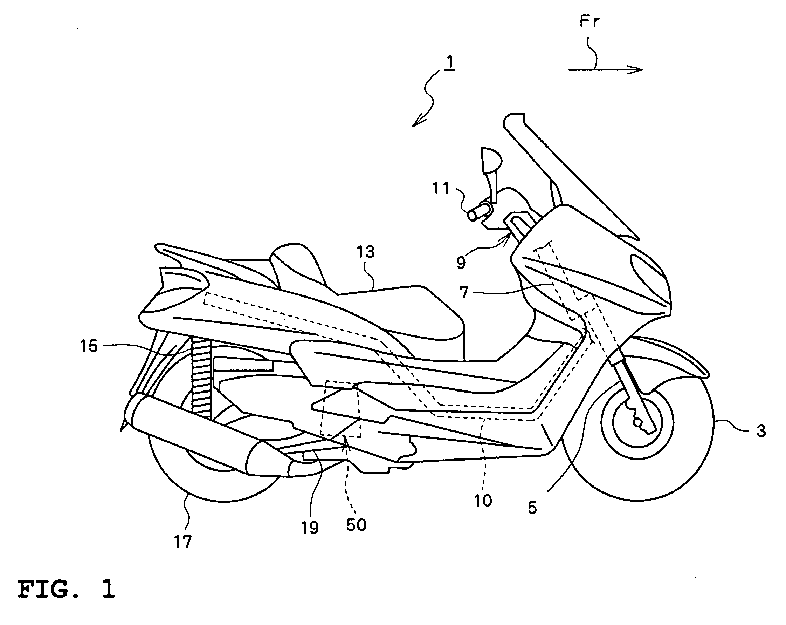

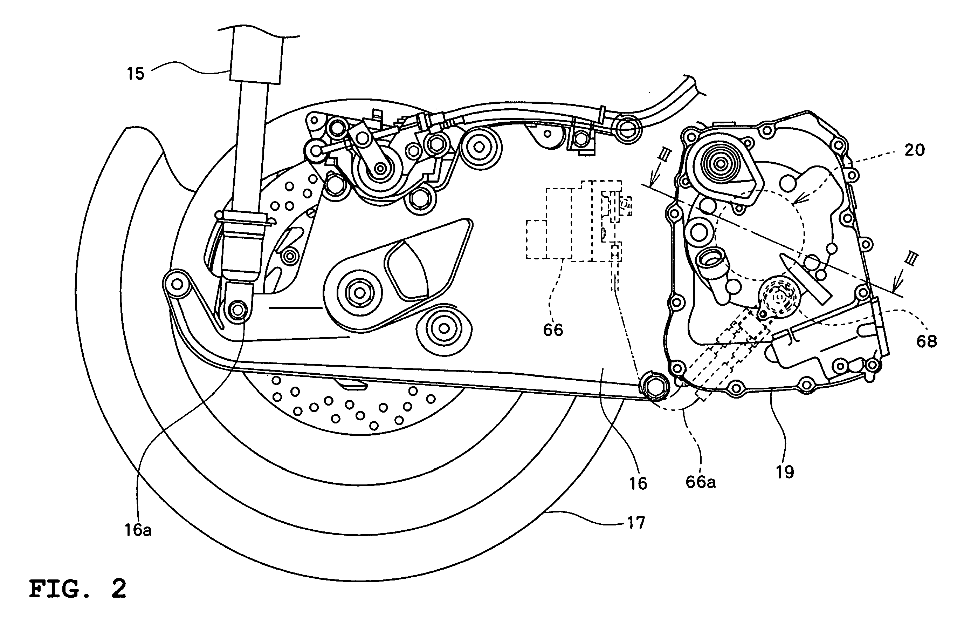

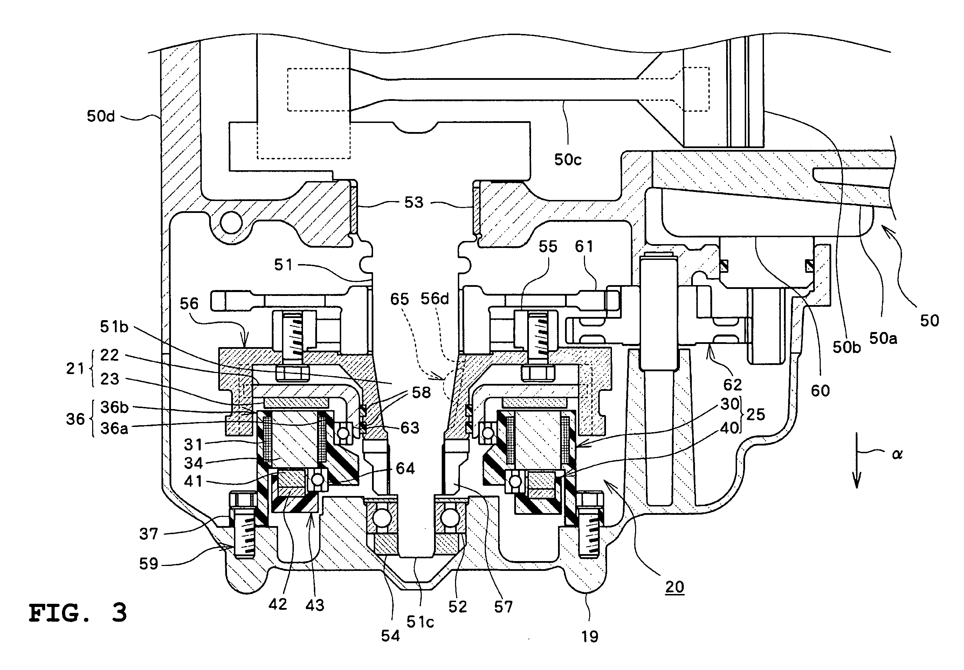

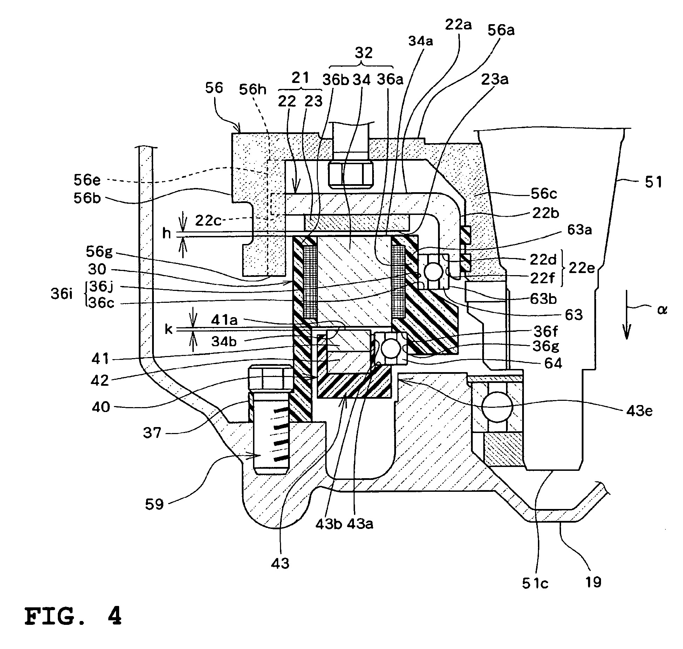

FIG. 1 is a side elevational view of a motorcycle 1 which is an example of a straddle type vehicle configured in accordance with an embodiment. FIG. 2 is a side elevational view of a rear portion of the motorcycle 1. FIG. 3 is a cross sectional view taken along the line III-III of FIG. 2. FIG. 4 is an enlarged view of a rotary electrical machine 20 of FIG. 3.

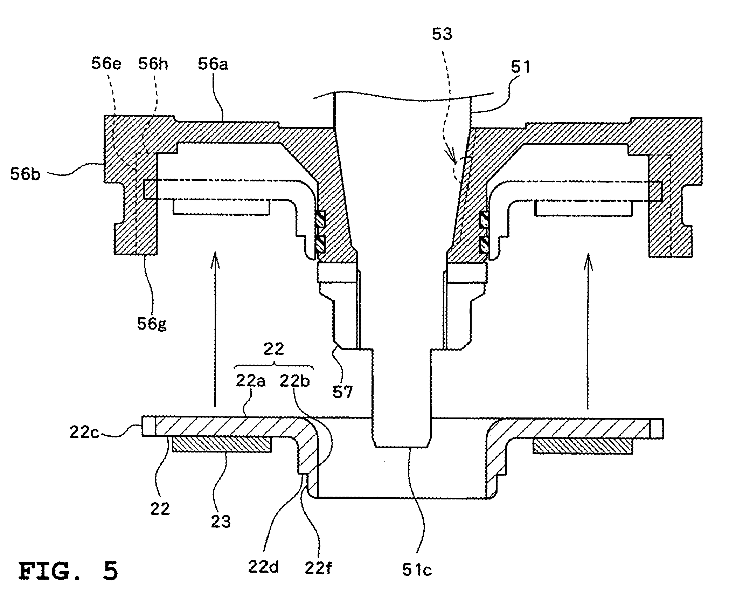

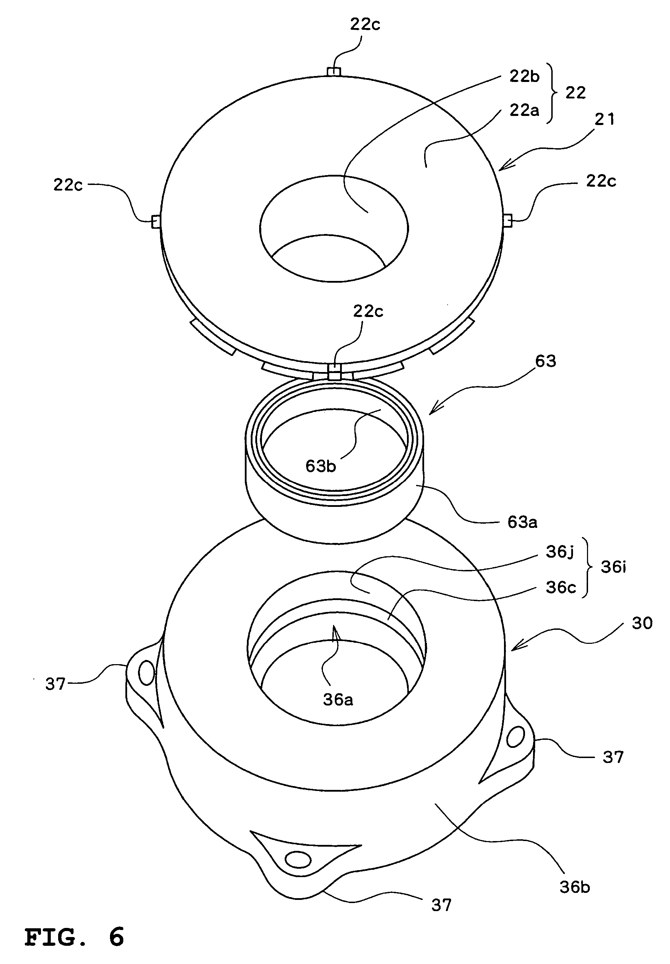

FIG. 5 is an illustration showing a state in which a rotor 25 of the rotary electrical machine 20 is slidable in an axial direction of a crankshaft 51. FIG. 6 is a schematically illustrated perspective exploded view of the rotary electrical machine 20. Additionally, a silencer, a body cover, etc. are omitted in FIG. 2.

As shown in FIG. 1, the motorcycle 1 has a front wheel 3 in a lower front portion of the body. A front fork 5 supports the front wheel 3 for rotation at a bottom end portion thereof. A steering shaft 7 is coupled with a top end portion of the front fork 5 to extend upward. Handlebars 9 are attached to a top end portion of the steering shaft 7 to extend in a width direction of the body. Respective ends of the handlebars 9 have a grip 11. A body frame 10 is attached to a center portion of the steering shaft 7.

The body frame 10 extends obliquely downward to a rear portion of the body of the vehicle, then bends and extends horizontally. Afterwards, the body frame 10 further bends and extends straightly. A seat 13 is disposed in an upper rear portion of the body frame 10. A top end of a rear suspension 15 is coupled with a rear end portion of the body frame 10. A bottom end of the rear suspension 15 is coupled with a rear end portion 16a of the rear arm 16 (see FIG. 2). The rear arm 16 supports a rear wheel 17 for rotation. The drive force of an engine 50 is transmitted to the rear wheel 17 through a drive force transmitting mechanism such as, for example, a belt type continuously variable transmission so that the rear wheel 17 rotates. The engine 50 is disposed in a lower center portion of the body frame 10.

A center portion of the engine 50 has a cylinder block 50a. The cylinder block 50a encloses a piston 50b. A top end of a connecting rod 50c is coupled with the piston 50b. A crankshaft 51 is attached to a bottom end of the connecting rod 50c.

A rotary electrical machine 20 is disposed in an outer location of the engine 50 in a width direction of the body (i.e., the direction indicated by the symbol [α] of FIG. 3). The rotary electrical machine 20 is attached to the crankshaft 51 (see FIG. 3). The rotary electrical machine 20 assists the power of the engine 50 or runs a vehicle by its own power. In addition, the rotary electrical machine 20 functions as a generator when a charge amount of a battery (not shown) is lower than a preset amount or in a similar situation.

As shown in FIGs. 3 and 4, a bearing 52 supports the crankshaft 51 for rotation. A case cover 19 covering a crankcase 50d laterally holds the bearing 52. A bearing 53 containing oil and held by the crankcase 50d supports the crankshaft 51 for rotation at a center thereof. A seal member 54 is put on a distal end 51 c of the crankshaft 51 from a location out of the bearing 52 in the width direction of the body.

A starter reduction gear 61, a one-way clutch 55, a flywheel 56 and the rotary electrical machine 20 are attached to the crankshaft 51 in this order from the center portion of the crankshaft 51 (i.e., the side where the connecting rod 50c is coupled) to the distal end 51 c thereof.

First, the starter reduction gear 61 and the one-way clutch 55 will be described. A gear 62 meshes with an output shaft of a self-starting motor 60. The starter reduction gear 61 is meshed with the gear 62. When starting an engine operation, the starter reduction gear 61 transmits the drive force of the self-starting motor 60 to the one-way clutch 55. The drive force transmitted to the one-way clutch 55 is transmitted to the crankshaft 51 through the flywheel 56 rotating together with the one-way clutch 55. On the other hand, after the engine 50 is started, the rotation of the self-starting motor 60 stops, and the one-way clutch 55 independently rotates relative to the starter reduction gear 61. The drive force of the engine 50 is thus not transmitted to the self-starting motor 60. Additionally, the starter reduction gear 61 idles relative to the crankshaft 51.

Next, the flywheel 56 (rotary member) will be described. The flywheel 56 includes a disk-like shaped disk section 56a, a cylindrically shaped large diameter cylindrical section 56b, and a cylindrically shaped small diameter cylindrical section 56c. A center of the disk section 56a has an aperture through which the crankshaft 51 extends. The large diameter cylindrical section 56b extends in the axial direction (called "in the rotational axis direction" below) of the crankshaft 51 from the rim of the disk section 56a toward the rotary electrical machine 20. The small diameter cylindrical section 56c extends in the rotational axis direction from the rim of the aperture of the disk section 56a toward the rotary electrical machine 20.

A plurality of bolt holes are formed at certain radial positions of the disk section 56a of the flywheel 56 in a circumferential direction thereof. Also, bolt holes are formed at positions of the one-way clutch 55 corresponding to the positions of the disk section 56a. Bolts are inserted into the bolt holes of the disk section 56a and the bolt holes of the one-way clutch 55, and fastened so that the flywheel 56 is fixed to the one-way clutch 55.

An inner circumferential surface of the small diameter cylindrical section 56c of the flywheel 56 has a groove-like recessed portion 56d extending straightly in the rotational axis direction. On the other hand, a circumferential surface of the crankshaft 51 has a recessed portion at a location opposing the inner circumferential surface of the flywheel 56, the recessed portion being formed in such a manner that the circumferential surface is semi-circularly engraved. An engaging member 65 which is suitable to a configuration of the recessed portion fits in this recessed portion. A peripheral portion of the engaging member 65 protrudes from the circumferential surface of the crankshaft 51 so as to engage with the recessed portion 56d of the small diameter cylindrical section 56c. Because the engaging member 65 engages with both of the flywheel 56 and the crankshaft 51, the flywheel 56 can rotate together with the crankshaft 51.

The inner circumferential surface of the small diameter cylindrical section 56c of the flywheel 56 tapers toward the distal end 51 c of the crankshaft 51. The crankshaft 51 has a taper section 51 b tapering toward the distal end 51 c. The crankshaft 51 is inserted into the small diameter cylindrical section 56c of the flywheel 56, and the inner circumferential surface of the small diameter cylindrical section 56c of the flywheel 56 abuts the outer circumferential surface of the taper section 51 b. Thereby, the flywheel 56 is prevented from moving toward the center of the crankshaft 51 more than the taper section 51 b, and a position of the flywheel 56 on the crankshaft 51 is decided. A nut 57 is put on the crankshaft 51 from the distal end 51c thereof. The nut 57 pushes the flywheel 56 toward the center of the crankshaft 51 so as to press the inner circumferential surface of the small diameter section 56c of the flywheel 56 to the outer circumferential surface of the taper section 51 b. Therefore, the flywheel 56 is coupled with the crankshaft 51 by friction.

An inner circumferential surface of the large diameter cylindrical section 56b of the flywheel 56 has a plurality of groove-like recessed portions 56e extending straightly in the rotational axis direction. A yoke 22 engages with the recessed portions 56e, and the rotor 21 rotates with the flywheel 56. The engagement between the yoke 22 and the flywheel 56 will be described in greater detail later.

Next, the rotary electrical machine 20 will be described. The rotary electrical machine 20 includes the rotor 21 and the stator 25 in this order from the center of the crankshaft 51. In this embodiment, a stator unit having a fixed stator 30 opposing the rotor 21 and a movable stator 40 opposing the fixed stator 30 on an opposite side to the rotor 21 is employed as the stator 25. As is described later, the field magnet generated by the stator 25 can be varied optionally.

The rotor 21 has the yoke 22 which is generally disk-like shaped and field magnets 23. The yoke 22 has a disk-like shaped disk section 22a and a cylindrically shaped inner cylindrical section 22b. A center of the disk section 22a has a through-hole through which the crankshaft 51 extends. The inner cylindrical section 22b extends in the rotational axis direction from the rim of the through-hole toward the fixed stator 30.

An inner diameter of the inner cylindrical section 22b is slightly larger than an outer diameter of the small diameter cylindrical section 56c of the flywheel 56. The crankshaft 51 and the small diameter cylindrical section 56c of the flywheel 56 are inserted into the inner cylindrical section 22b. Two circular elastic members 58, 58 fit in a space between the inner circumferential surface of the inner cylindrical section 22b and the outer circumferential surface of the small cylindrical section 56c of the flywheel 56. The elastic members 58, 58 seal the space between the inner circumferential surface of the inner cylindrical section 22b and the outer circumferential surface of the small cylindrical section 56c of the flywheel 56 so as to, for example, inhibit the rotor 21 from vibrating when the rotary electrical machine 20 rotates. Additionally, the multiple field magnets 23 are circularly placed and are joined to a surface of the disk section 22a facing the fixed stator 30.

As shown in FIG. 4 or FIG. 5, the rotor 21 is attached to the flywheel 56 so as to be movable in the rotational axis direction. Specifically, an outer diameter of the disk section 22a of the yoke 22 is almost equal to an inner diameter of the large diameter cylindrical section 56b of the flywheel 56. An outer circumferential portion of the disk section 22a has projections 22c (engaged sections) projecting outward in the radial direction whose number is the same as the number of the recessed portions 56e (engaging sections) of the flywheel 56. The projections 22c are engaged with the recessed portions 56e so as to be slidable along the recessed portions 56e in the rotational axis direction. Thereby, the rotor 21 is attached to the flywheel 56 in such a manner that the rotor 21 is allowed to move in the rotational axis direction while not allowed to rotate relative to the flywheel 56. In addition, each recessed portion 56e extends from an end 56h of the large diameter cylindrical section 56b on the side of the disk section 56a to an end 56g of the large diameter cylindrical section 56b on the side of the rotary electrical machine 20. Thereby, the rotor 21 can slide in the rotational axis direction from the end 56g to the limit where the rotor 21 does not touch the head of the bolt with which the flywheel 56 is fixed to the one-way clutch 55.

The stator 25 will be described now. As discussed above, the stator 25 includes the fixed stator 30 and the movable stator 40. As shown in FIG. 3 and FIG. 4, the fixed stator 30 has a plurality of fixed teeth 34 each formed with an iron core. The multiple fixed teeth 34 are circularly arranged to surround the crankshaft 51. End surfaces 34a (magnetic flux generating area) of the respective fixed teeth 34 facing the rotor 21 oppose the field magnets 23 of the rotor 21. Coils 31 are wound around the respective fixed teeth 34 to generate magnetic fluxes when electric current flows therethrough. Those multiple fixed teeth 34 and coils 31 are molded by a resin section 36 made of a resin material which contains lubricant. The resin section 36 is circularly formed around the axis of the crankshaft 51. The resin section 36 has a generally cylindrically shaped inner circumferential section 36a positioned more inside than a coil block formed with the multiple coils 31 (i.e., inside location closer to the axis of the crankshaft 51 than the multiple coils 31)(see FIG. 3). Also, the resin section 36 has a generally cylindrically shaped outer circumferential section 36b outside of the coil block in the radial direction.

The outer circumferential section 36b is fixed to the case cover 19 (fixed member). Specifically, the cylindrical outer circumferential section 36b extends toward the case cover 19, and a peripheral end thereof facing the case cover 19 has a plurality of lock portions 37. Each lock portion 37 extends outward in the radial direction from the peripheral end of the outer circumferential section 36b facing the cover 19 (see FIG. 6). Each lock portion 37 has bolt holes. On the other hand, the case cover 19 has bolt holes 59 at portions corresponding to the lock portions 37. Bolts fit in the holes of the respective lock portions 37 and the respective bolt holes 59. The fixed stator 30 is thus fixed to the case cover 19 so that the movement in the rotational axis direction and the rotation about the axis of the crankshaft 51 (called "the rotational axis" below) both are not allowed.

As shown in FIG. 4 or FIG. 6, the fixed teeth 34, the inner circumferential section 36a and the outer circumferential section 36b together form a rotor opposing section 32 which has a circular shape. The rotor opposing section 32 opposes the rotor 21 and is formed to surround the axis of the crankshaft 51 (see FIG. 4). That is, the respective end surfaces 34a of the fixed teeth 34 and the end surface of the outer circumferential section 36b facing the rotor 21 oppose the disk section 22a of the yoke 22. The inner circumferential section 36a opposes the inner cylindrical section 22b of the yoke 22. A bearing 63 is positioned inside of the inner circumferential surface of the rotor opposing section 32. The rotor opposing section 32 thus supports the rotor 21 via the bearing 63 for pivotal movement.

Specifically, the inner circumferential section 36a has a bearing holding portion 36i. The bearing holding portion 36i has a circular bearing holding surface 36c and a bearing abutting surface 36j. The bearing holding surface 36c extends normal to the crankshaft 51 so as to oppose the rotor 21, and is placed in the vicinity of a mid position of the inner circumferential section 36a between the end thereof facing the rotor 21 and the end thereof facing the movable stator 40. The bearing abutting surface 36j abuts an outer circumferential surface 63a of the bearing 63.

The inner cylindrical section 22b of the yoke 22 has a portion-held-by-bearing 22e at a portion closer to the distal end 51 c of the crankshaft 51. The portion-held-by-bearing 22e has a circular surface-held-by-bearing 22d and a bearing abutting surface 22f which is cylindrically shaped. The surface-held-by-bearing 22d extends normal to the crankshaft 51 so as to oppose the fixed stator 30 in the vicinity of a mid position of the inner cylindrical section 22b in the rotational axis direction. The bearing abutting surface 22f abuts the inner circumferential surface 63b of the bearing 63.

The bearing 63 is positioned between the bearing holding surface 36c of the fixed stator 30 and the surface-held-by-bearing 22d of the yoke 22. As discussed above, the rotor 21 is slidable in the rotational axis direction and is attracted toward the fixed stator 30 by the magnetic force of the field magnets 23. The bearing holding surface 36c presses the surface-held-by-bearing 22d to the center of the crankshaft 51 via the bearing 63 and holds the yoke 22 against the attractive force (magnetic force). Thereby, an opposing surface 23a of each field magnet 23 opposing the fixed stator 30 is spaced apart from the end surface 34a of the respective fixed tooth 34 opposing the field magnet 23 by a distance [h]. The distance [h] is determined in accordance with a position of the bearing holding surface 36c of the fixed stator 30, a width of the bearing 63 in the rotational axis direction and a position of the surface-held-by-bearing 22d of the yoke 22.

The bearing 63 abuts both the bearing abutting surface 36j of the fixed stator 30 and the bearing abutting surface 22f of the yoke 22. Thereby, the yoke 22 rotates about the rotational axis without swinging in the radial direction, and the rotor opposing section 32 supports the rotor 21 for pivotal movement via the bearing 63. Additionally, in FIG. 6, the coils 31 and the fixed teeth 34 are omitted.

A configuration of the fixed stator 30 facing the movable stator 40 will be described. The inner circumferential section 36a of the fixed stator 30 facing the movable stator 40 has a circularly shaped bearing holding surface 36f and a circularly shaped projection 36g.

The bearing holding surface 36f extends normal to the crankshaft 51 so as to oppose the movable stator 40. The projection 36g extends from an inner peripheral end of the bearing holding surface 36f toward the movable stator 40. The inner circumferential surface of the bearing 64 abuts the outer circumferential surface 63a of the projection 36g. The bearing holding surface 36f holds the bearing 64 and ensures a spacing distance between the movable stator 40 and the fixed stator 30. The ensuring of the spacing distance by the bearing holding surface 36f will be described in greater detail later.

As discussed above, the movable stator 40 opposes the fixed stator 30 on the opposite side to the rotor 21. The movable stator 40 has movable teeth 41 whose number is the same as the number of the fixed teeth 34 and circular base 42. The base 42 supports the movable teeth 41 so that the movable teeth 41 are circularly placed about the axis of the crankshaft 51. The base 42 and the movable teeth 41 are molded by a resin section 43 made of a resin material containing lubricant. The resin section 43 has a circular inner circumferential section 43e positioned inside of the multiple movable teeth 41 and the base 42 in the radial direction (i.e., inside location closer to the axis of the crankshaft 51).

The inner circumferential section 43e has a bearing holding surface 43a extending normal to the crankshaft 51 so as to oppose the fixed stator 30. Because the bearing 64 supports the bearing holding surface 43a, an end surface 41 a of each movable tooth 41 is spaced apart from an end surface 34b of the respective fixed tooth 34 by a distance [k].

Specifically, each movable tooth 41 is formed with an iron core. The magnetic force generated by electric current flowing through the coils 31 attracts the movable teeth 41 toward the fixed teeth 34. The bearing 64 is positioned between the bearing holding surface 43a and the bearing holding surface 36f of the fixed stator 30. The bearing holding surface 36f supports the bearing holding surface 43a toward the case cover 19 against the attractive force via the bearing 64. Thereby, the end surface 41a of each movable tooth 41 is spaced apart from the end surface 34b of the respective fixed tooth 34 by the distance [k].

An inner circumferential surface of the inner circumferential section 43e of the movable stator 40 has an abutting surface 43b which abuts an outer circumferential surface of the bearing 64. The abutting surface 43b abuts the entire outer circumferential surface of the baring 64. The movable stator 40 rotates about the rotational axis while being prevented from moving in the radial direction.

According to the rotary electrical machine 20 described above, the fixed stator 30 is fixed to the case cover 19 in such a manner that the fixed stator 30 is not allowed to move in the rotational axis direction. Meanwhile, the rotor 21 is attached to the flywheel 56 in such a manner that the rotor 21 is allowed to move in the rotational axis direction. In addition, the fixed stator 30 has the bearing holding portion 36i. The bearing 63 is attached to the bearing holding portion 36i. Therefore, even though any errors exist in the configuration of the case cover 19 or in the attached positions of the flywheel 56, the rotor 21 slides to be supported by the bearing holding portion 36i of the fixed stator 30 for rotation. Also, the accurate spacing distance between the opposing surfaces 23a of the field magnets 23 and the end surfaces 34a of the fixed teeth 34 can be ensured.

Additionally, in the rotary electrical machine 20, the movable stator 40 rotates about the rotational axis relative to the fixed stator 30. Thereby, the rotary electrical machine 20 can vary its output characteristics so as to operate in a high torque and low speed rotational range or in a low torque and high speed rotational range.

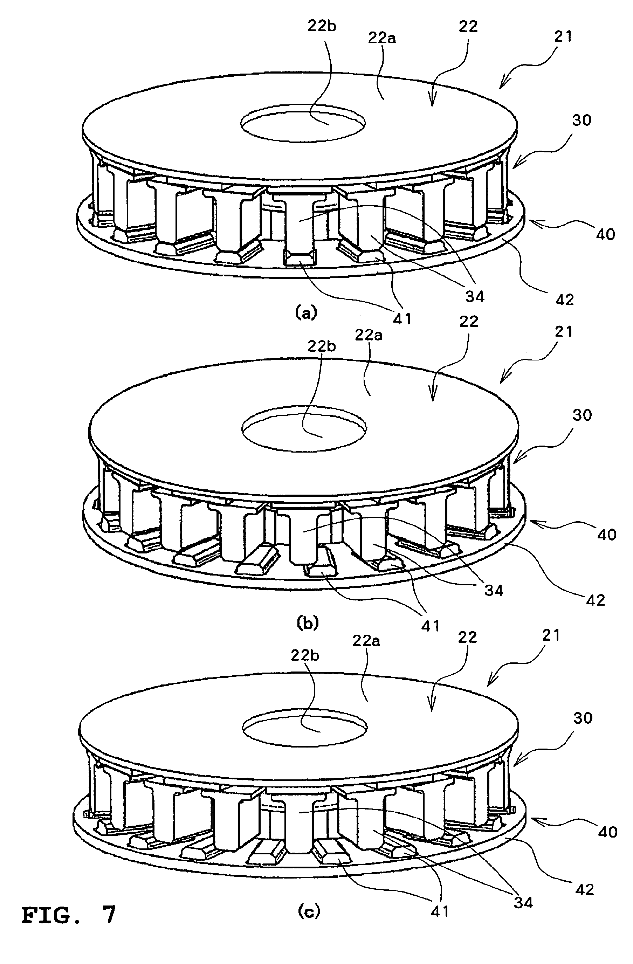

FIG. 7 includes illustrations showing states in which the movable stator 40 rotates relative to the fixed stator 30. For the explaining purpose, in this figure, the resin section 36 of the fixed stator 30 and the resin section 43 of the movable stator 40 both shown in FIG. 3, the crankshaft 51 and the coils 31 are omitted. Also, in this figure, the same portions as those of FIG. 3 are assigned with the same reference numerals and symbols.

FIG. 7(a) shows that the movable teeth 41 of the movable stator 40 right oppose the fixed teeth 34 of the fixed stator 30. Under this condition, the spacing distance between the end surface 34b of each fixed tooth 34 facing the respective movable tooth 34b and the end surface 41 a of each movable tooth 41 facing the respective fixed tooth 34 is the smallest value [k] (see FIG. 4). In this state, the magnetic fluxes pass through the fixed teeth 34, the movable teeth 41, the base 42 and the field magnets 23. The magnetic fluxes flow from the end surfaces 34a of the respective fixed teeth 34 facing the field magnets 23 to the opposite end surfaces 34b thereof, i.e., through the insides of the respective coils 31.

A motor 66 which will be described below drives the movable stator 40 to rotate. The movable stator 40 rotates to the position shown in FIG. 7(c), i.e., until each movable tooth 41 is intermediately positioned between the respective fixed tooth 34 and the neighboring fixed tooth 34, after taking a middle position shown in FIG. 7(b). In this state, the spacing distance between the end surface 34b of each fixed tooth 34 facing the respective movable tooth 41 and the end surface 41 a of each movable tooth 41 facing the respective fixing tooth 34 is enlarged. Therefore, the magnetic fluxes do not flow the movable teeth 41 but flow the vicinity of the rotor 21 in the fixed teeth 34 and the field magnets 23. Because the magnetic fluxes do not flow through the insides of the coils 31, they are weaker than the magnetic fluxes in the state of FIG. 7(a). Also, because the magnetic fluxes are weak under the condition shown in FIG. 7(c), the rotary electrical machine 20 works as a low torque and high speed rotation type rotary electrical machine. On the other hand, under the condition shown in FIG. 7(a), the magnetic fluxes are stronger than those in the state of FIG. 7(c) because the magnetic fluxes flow through the insides of the coils 31. The rotary electrical machine 20 thus works as a high torque and low speed rotation type rotary electrical machine.

Additionally, such a rotation of the movable stator 40 is practicable by being driven by the motor 66. That is, a portion of the outer circumferential surface of the resin section 43 of the movable stator 40 projects outward in the radial direction and meshes with a gear extending outward from the rotary electrical machine 20 in the radial direction. A wire 66a is wound around the gear, and the wire 66a is connected to the motor 66 (see FIG. 2). When the motor 66 rotates in a right direction or in a reverse direction, the movable stator 40 rotates about the rotational axis relative to the fixed stator 30.

The teaching of the present embodiment is not limited to the rotary electrical machine 20 discussed above and can have various alternatives. For example, in the rotary electrical machine 20, the inner circumferential surface of the large diameter cylindrical section 56b of the flywheel 56 has the projections 56e. Alternatively, however, the disk section 56a of the flywheel 56 can have a plurality of projections projecting toward the rotary electrical machine 20. In this alternative, the disk section 22a of the yoke 22 can have through-holes or recessed portions corresponding to the projections of the flywheel 56, and the projections of the flywheel 56 can detachably fit in the through-holes or the recessed portions. Thereby, the rotor 21 is attached to the flywheel 56 so that the rotor 21 is allowed to move in the rotational axis direction but is not allowed to rotate relative to the flywheel 56.

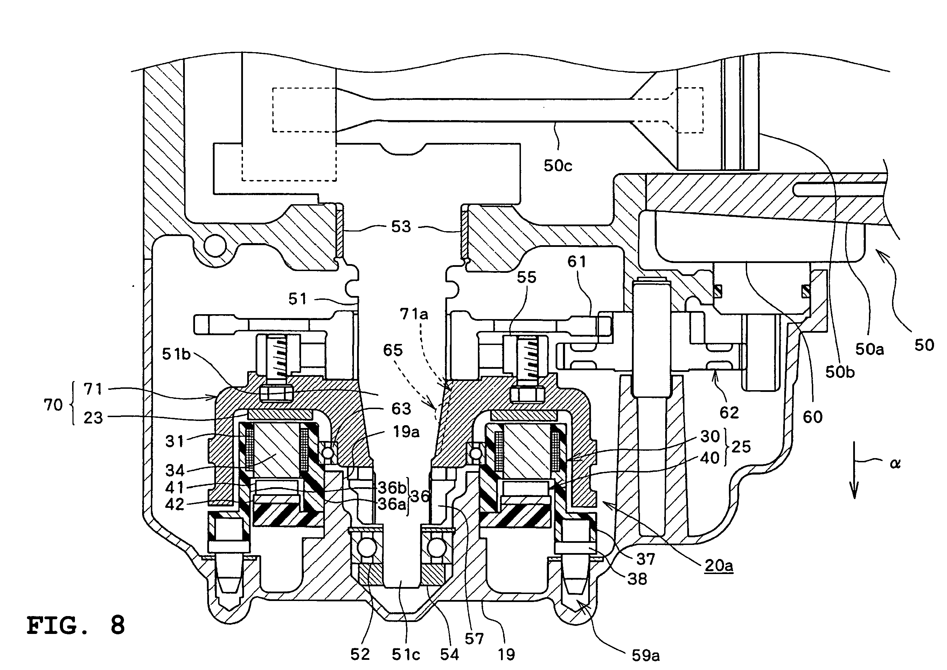

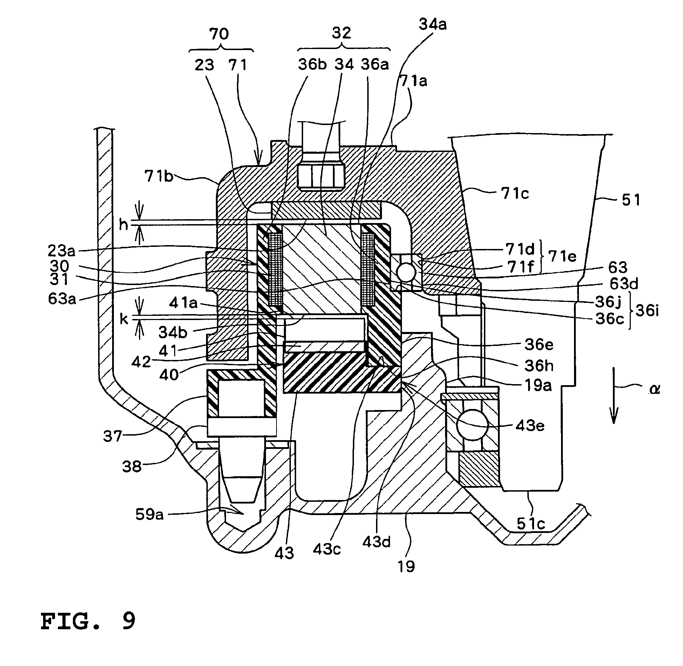

Also, in the rotary electrical machine 20 discussed above, the rotor 21 is attached to the flywheel 56 so that the rotor 21 is allowed to move in the rotational axis direction. Alternatively, however, the rotor 21 can be attached to the case cover 19 so that the fixed stator 30 is allowed to move in the rotational axis direction. FIG. 8 is a cross sectional view of a rotary electrical machine 20a in this alternative embodiment. FIG. 9 is an enlarged view of FIG. 8. In those figures, the same portions as those of the rotary electrical machine 20 are assigned with the same reference numerals and symbols.

In the rotary electrical machine 20a, a rotor 70 is attached to the crankshaft 51 (rotary member) so that the rotor 70 is not allowed to rotate relative to the crankshaft 51 and also is not allowed to move in the rotational axis direction. The fixed stator 30 is attached to the case cover 19 so that the fixed stator 30 is allowed to move in the rotational axis direction.

First, the rotor 70 will be described. The rotor 70 has a bowl-like shaped yoke 71. The yoke 71 includes a disk-like shaped disk section 71 a, a cylindrically shaped outer cylindrical section 71 b and a cylindrically shaped inner cylindrical section 71 c. A center portion of the disk section 71a has a through-hole through which the crankshaft 51 extends. The inner cylindrical section 71 c extends from the rim of the through-hole in the rotational axis direction. The outer cylindrical section 71 b extends from the rim of the disk section 71 a toward the fixed stator 30 in the rotational axis direction.

An inner circumferential surface of the inner cylindrical section 71 c of the yoke 71 tapers toward the distal end 51 c of the crankshaft 51. Meanwhile, the crankshaft 51 has the taper section 51 b tapering toward the distal end 51 c. The nut 57 is put on the crankshaft 51 and pushes the yoke 71 toward the center of the crankshaft 51. The inner circumferential surface of the inner cylindrical section 71 c of the yoke 71 is thus pressed to the outer circumferential surface of the taper section 51 b. Thereby, the yoke 71 is coupled with the crankshaft 51 by friction so that the yoke 71 is not allowed to rotate relative to the crankshaft 51 and also not allowed to move in the rotational axis direction.

Similarly to the flywheel 56, the yoke 71 engages with the engaging member 65 which engages with the taper section 51 b of the crankshaft 51. That is, the inner circumferential surface of the inner cylindrical section 71 c of the yoke 71 has a groove-like recessed portion 71 extending straightly in the rotational axis direction. On the other hand, a circumferential surface of the taper section 51 b of the crankshaft 51 has a recessed portion formed in such a manner that the circumferential surface is semi-circularly engraved. The engaging member 65 fits in this recessed portion, and a peripheral portion of the engaging member 65 engages with the recessed portion 71 i of the yoke 71. Thereby, the yoke 71 is prevented from rotating relative to the crankshaft 51.

The disk section 71 a of the yoke 71 has a plurality of bolt holes. Meanwhile, the one-way clutch 55 has bolt holes at portions corresponding to the holes of the disk section 71 a. The holes of the disk section 71 a and the bolt holes of the one-way clutch 55 are fastened by bolts so that the yoke 71 is also fixed to the one-way clutch 55. Additionally, the outer cylindrical section 71 b is formed to be thick so as to increase the mass of the yoke 71. The yoke 71 can thus also function as a flywheel.

Next, the fixed stator 30 will be described. The fixed stator 30 has pins 38 (engaged sections) extending in the rotational axis. The case cover 19 has recessed portions 59a (engaging sections) opening toward the fixed stator 30. The pins 38 detachably fit in the respective recessed portions 59a (engaging sections); thereby, the fixed stator 30 is attached to the case cover 19 so that the fixed stator 30 is allowed to move in the rotational direction.

Specifically, a peripheral portion of the outer circumferential section 36b of the fixed stator 30 facing the case cover 19 has a plurality of lock sections 37. Each lock section 37 has the respective recessed portion opening toward the case cover 19. A head portion of each pin 38 fits in the recessed portion. The case cover 19 has recessed portions 59a at portions corresponding to the respective lock sections 37. Each recessed portion 59a is formed slightly larger than a tip of the respective pin 38 facing the case cover 19. A tip of each pin 38 is detachably inserted into the associated recessed portion 59a. Consequently, the fixed stator 30 is attached to the case cover 19 so that it is allowed to move in the rotational axis while not allowed to rotate about the rotational axis.

In this embodiment, similarly to the above embodiment, the inner circumferential section 36a of the fixed stator 30 has the bearing holding portion 36i, and the fixed stator 30 supports the rotor 70 for pivotal movement. Specifically, the inner cylindrical section 71 c of the yoke 71 has a portion-held-by-bearing 71e. A surface-held-by-bearing 71d and a bearing abutting surface 71f are formed in the portion-held-by-bearing 71e. On the other hand, a bearing holding surface 36c and a bearing abutting surface 36j are formed in the bearing holding portion 36i of the inner circumferential section 36a. The bearing 63 is positioned between the surface-held-by-bearing 71d of the yoke 71 and the bearing holding surface 36c of the fixed stator 30. Therefore, although the fixed stator 30 is attracted toward the rotor 70 by the magnetic force of the field magnets 23, the bearing 63 supports the fixed stator 30 not to abut the rotor 70. The bearing abutting surface 71f of the yoke 71 abuts the inner circumferential surface of the bearing 63, while the bearing abutting surface 36j of the fixed stator 30 abuts the outer circumferential surface of the bearing 63. Thereby, the fixed stator 30 supports the rotor 70 for rotation.

In FIGs. 8 and 9, the case cover 19 has a cylindrical section 19a extending toward the rotary electrical machine 20a and having a cylindrical shape whose center is the rotational axis. A cylindrically shaped abutting surface 36e is formed in the inner circumferential surface of the fixed stator 30. The abutting surface 36e abuts the entire outer circumferential surface of the cylindrical section 19a; thereby, the vibration of the fixed stator 30 occurring when the rotary electrical machine 20a operates is inhibited.

The inner circumferential surface 43d of the resin section 43 of the movable stator 40 also abuts the outer circumferential surface of the cylindrical section 19a. The inner circumferential surface 43d abuts the entire outer circumferential surface of the cylindrical section 19a; thereby, the vibration of the movable stator 40 is also inhibited.

In the rotary electrical machine 20a shown in FIGs. 8 and 9, no bearing is disposed between the fixed stator 30 and the movable stator 40, and the fixed stator 30 and the movable stator 40 directly abut each other. Thereby, the spacing distance is ensured.

Specifically, an end surface 36h of the inner circumferential section 36a of the fixed stator 30 facing the movable stator 40 extends normal to the crankshaft 51 so as to oppose the movable stator 40. On the other hand, the inner circumferential section 43e of the movable stator 40 has an opposing surface 43c extending normal to the crankshaft 51 so as to oppose the end surface 36h. This opposing surface 43c and the end surface 36h of the inner circumferential section 36a abut each other; thereby, the end surfaces 34b of the fixed teeth 34 are spaced apart from the end surfaces 41 a of the movable teeth 41 by the distance [k].

As thus discussed, in the rotary electrical machine 20a, the rotor 70 is fixed to the crankshaft 51 in such a manner that the rotor 70 is not allowed to move in the rotational axis direction. Meanwhile, the fixed stator 30 is attached to the case cover 19 in such a manner that the fixed stator 30 is allowed to move in the rotational axis. Therefore, even though any errors exist in the configuration of the case cover 19 or in the attached position of the crankshaft 51, the fixed stator 30 can move in the rotational axis, and the spacing distance between the opposing surfaces 23a of the field magnets 23 and the end surfaces 34a of the fixed teeth 34 can be accurately set. Also, because the bearing is placed between the rotor 70 and the fixed stator 30, the fixed stator 30 supports the rotor 70 for rotation.

Additionally, the rotary electrical machines 20, 20a described above have the movable stator 40 which rotates relative to the fixed stator 30 in addition to the fixed stator 30 which is not able to rotate about the rotational axis. Alternatively, however, the rotary electrical machines 20, 20a can have only the fixed stator 30 which is not able to rotate about the rotational axis without having the movable stator 40.

The description above discloses (amongst others) in order to solve the problems, an embodiment of a rotary electrical machine which includes: a rotor attached to a rotary member, which is rotatable about an axis in such a manner that the rotor is not allowed to rotate relative to the rotary member at least about the axis, and rotating together with the rotary member about the axis; and a stator opposing the rotor in a direction of the axis, and attached to a fixed member in such a manner that the stator is not allowed to rotate relative to the fixed member at least about the axis, in which either one of the rotor or the stator is attached to the rotary member or the fixed member in such a manner that the rotor or the stator is not allowed to move in the direction of the axis and the rest is allowed to move in the direction of the axis, an opposing surface of the stator opposing the rotor has a circularly formed magnetic flux generating area in which a means for generating magnetic fluxes is embedded, and the stator has a support section supporting the rotor in such a manner that a spacing distance between an opposing surface of the rotor opposing the magnetic flux generating area and the magnetic flux generating area is fixed.

In this regard, the rotary member can be a member rotating about the axis such as, for example, a crankshaft, a flywheel, a clutch housing and a sheave of a continuously variable transmission. The fixed member can be a cover covering the rotary electrical machine, a crankcase, a transmission case covering a power transmission mechanism from an engine to a rear wheel such as, for example, a chain, a belt and a shaft, or the like.

According to the present embodiment, even though there are some errors in the configurations or positions of the rotary member or the fixed member, the spacing distance between the rotor and the stator can be accurately set. Either one of the rotor or the stator has the field magnets and the rest of them has the coils or the like. The magnetic flux generating means can be the coil, the field magnet or the like.

In one aspect of the present embodiment, the rest of the rotor and the stator is attached to the rotary member or the fixed member in such a manner that the rest of the rotor and the stator is allowed to move in the direction of the axis by a slide means, and the slide means includes an engaging section formed on the rotary member or the fixed member and extending in the direction of the axis, and an engaged section formed on the rotor or the stator and engaged with the engaging section to slide along the engaging section in the direction of the axis. According to the aspect, even though there are some errors in the configurations or positions of the rotary member or the fixed member, the spacing distance between the rotor and the stator can be accurately set. The engaging portion can be, for example, a recessed portion or a through-hole extending in the direction of the axis, while the oppositely engaging portion can be, for example, a projecting pin, bolt or a portion formed as a projection of resin, metal or the like.

In another aspect of the present embodiment, the support section of the stator directly or indirectly abuts the rotor to support the rotor for pivotal movement. According to the aspect, even though there are some errors in the configurations or positions of the rotary member or the fixed member, the spacing distance between the rotor and the stator can be accurately set.

In this aspect, the support section of the stator can support the rotor for pivotal movement via a bearing. According to this aspect, the rotor is supported so as to smoothly rotate relative to stator.

Also, in the aspect, the stator can have the opposing surface having the magnetic flux generating area and can have a rotor opposing section which opposes the rotor and has a circularly shaped cross section, and the support section can be formed in an inner circumferential surface or an outer circumferential surface of the rotor opposing section. The magnetic flux generating means is embedded in the magnetic flux generating area of the rotor opposing section. Therefore, the rotor opposing section has the inner circumferential surface and the outer circumferential surface both having a width in the direction of the axis. According to this aspect, the support section is formed in the inner circumferential surface or the outer circumferential surface of the rotor opposing section, i.e., at a position spaced apart from the magnetic flux generating area in the direction of the axis, and the support section supports the rotor. Therefore, the spacing distance between the magnetic flux generating area and the rotor can be short.

Further, in the aspect, at least one of the support section of the stator and the engaged section of the rotor abutting the bearing can be made of a resin material. The rotor or the stator has a tooth formed with a coil and an iron core, a field magnet and so forth. Because the bearing does not directly abut those members but abuts the section made of a resin material, the wear or the like of the bearing can be inhibited.

An engine according to the present embodiment is coupled with any one of the rotary electrical machines described above. Because the spacing distance between the rotor and the stator is accurately set in the any one of the rotary electrical machines, its output characteristics can be accurately controlled. Therefore, when the rotary electrical machine assists the operation of the engine, the assist can be accurately controlled.

A vehicle according to the present embodiment includes any one of the rotary electrical machines described above. Because the spacing distance between the rotor and the stator is accurately set in the any one of the rotary electrical machines, its output characteristics can be accurately controlled. Therefore, when the rotary electrical machine operates to run the vehicle, the running of the vehicle can be accurately controlled. Additionally, the vehicle includes, for example, a motorcycle (including a bicycle with a motor (motor-bike) and a scooter), a four-wheeled buggy (all terrain vehicle), a snowmobile and a four wheeled buggy for two to four passengers (all terrain vehicle) or the like.

The description above discloses, as a preferred first aspect, an embodiment of a rotary electrical machine comprising: a rotor attached to a rotary member which is rotatable about an axis, in such a manner that the rotor is not allowed to rotate relative to the rotary member at least about the axis, and rotating together with the rotary member about the axis; and a stator opposing the rotor in a direction of the axis, and attached to a fixed member in such a manner that the stator is not allowed to rotate relative to the fixed member at least about the axis, wherein either one of the rotor or the stator is attached to the rotary member or the fixed member in such a manner that the rotor or the stator is not allowed to move in the direction of the axis and the rest is allowed to move in the direction of the axis, an opposing surface of the stator opposing the rotor has a circularly formed magnetic flux generating area in which a means for generating magnetic fluxes is embedded, and the stator has a support section supporting the rotor in such a manner that a spacing distance between an opposing surface of the rotor opposing the magnetic flux generating area and the magnetic flux generating area is fixed.

Further, as a preferred second aspect, the rest of the rotor and the stator is attached to the rotary member or the fixed member in such a manner that the rest of the rotor and the stator is allowed to move in the direction of the axis by a slide means, and the slide means includes an engaging section formed on the rotary member or the fixed member and extending in the direction of the axis, and an engaged section formed on the rotor or the stator and engaged with the engaging section to slide along the engaging section in the direction of the axis.

Further, as a preferred third aspect, the support section of the stator directly or indirectly abuts the rotor to support the rotor for pivotal movement.

Further, as a preferred fourth aspect, the support section of the stator supports the rotor for pivotal movement via a bearing.

Further, as a preferred fifth aspect, the stator has the opposing surface having the magnetic flux generating area and has a rotor opposing section which opposes the rotor and has a circularly shaped cross section, and the support section is formed in an inner circumferential surface or an outer circumferential surface of the rotor opposing section.

Further, as a preferred sixth aspect, at least one of the support section of the stator and the engaged section of the rotor abutting the bearing is made of a resin material.

Further, the description discloses a preferred embodiment of an engine coupled with the rotary electrical machine according to one of the above embodiments.

Further, the description also discloses a preferred embodiment of a vehicle including the rotary electrical machine according to one of the above embodiments.

The description above further discloses in order to provide a rotary electrical machine of which spacing distance between field magnets of a rotor and a stator can be accurately and easily set, an embodiment wherein a rotary electrical machine 20 includes a rotor 21 attached to a flywheel 56 which is rotatable about an axis of a crankshaft 51, in such a manner that the rotor 21 is not allowed to rotate relative to the flywheel 56 about the axis, and a stator 30 opposing the rotor 21 and attached to a case cover 19 in such a manner that the stator 30 is not allowed to rotate relative to the case cover 19 about the axis. Either one of the rotor 21 or the stator 30 is attached to the flywheel 56 or the case cover 19, in such a manner that the rotor 21 or the stator 30 is not allowed to move in the direction of the axis and the rest is allowed to move in the direction of the axis. The stator 30 has a support section supporting the rotor 21 in such a manner that a spacing distance between the stator 30 and the rotor 21 is fixed.

## Claims

1. Rotary electrical machine comprising
a rotor attached to a rotary member which is rotatable about an axis, in such a manner that the rotor is not allowed to rotate relative to the rotary member at least about the axis, and is rotating together with the rotary member about the axis, and a stator opposing the rotor in a direction of the axis, and being attached to a fixed member in such a manner that the stator is not allowed to rotate relative to the fixed member at least about the axis,
wherein either one of the rotor or the stator is attached to the rotary member or the fixed member in such a manner that the rotor or the stator is not allowed to move in the direction of the axis and the respective other is allowed to move in the direction of the axis,
wherein the stator has a support section supporting the rotor in such a manner that a spacing distance between the stator and the rotor is fixed.

2. Rotary electrical machine according to claim 1, in which an opposing surface of the stator opposing the rotor has a circularly formed magnetic flux generating area in which a means for generating magnetic fluxes is embedded, wherein the stator has the support section supporting the rotor in such a manner that the spacing distance between an opposing surface of the rotor opposing the magnetic flux generating area and the magnetic flux generating area is fixed.

3. Rotary electrical machine according to claim 1 or 2, wherein the respective other of the rotor and the stator is attached to the rotary member or the fixed member in such a manner that the respective other of the rotor and the stator is allowed to move in the direction of the axis by a slide means, and the slide means includes an engaging section formed on the rotary member or the fixed member and extending in the direction of the axis, and an engaged section formed on the rotor or the stator and engaged with the engaging section to slide along the engaging section in the direction of the axis.

4. Rotary electrical machine according to one of the claims 1 to 3, wherein the support section of the stator directly or indirectly abuts the rotor to support the rotor for pivotal movement.

5. Rotary electrical machine according to claim 4, wherein the support section of the stator supports the rotor for pivotal movement via a bearing.

6. Rotary electrical machine according to claim 4 or 5, wherein the stator has the opposing surface having the magnetic flux generating area and has a rotor opposing section which opposes the rotor and has a circularly shaped cross section, and the support section is formed in an inner circumferential surface or an outer circumferential surface of the rotor opposing section.

7. Rotary electrical machine according to claim 5 or 6, wherein at least one of the support section of the stator and the engaged section of the rotor abutting the bearing is made of a resin material.

8. Rotary electrical machine according to one of the claims 1 to 7, wherein the rotary member is either a crankshaft, a flywheel, a clutch housing or a sheave of a continuously variable transmission, and wherein the fixed member is either a cover covering the rotary electrical machine, a crankcase, or a transmission case covering a power transmission mechanism from an engine to a rear wheel.

9. Rotary electrical machine according to one of the claims 1 to 8, wherein either one of the rotor or the stator has the field magnets and the respective other of them has the coils.

10. Rotary electrical machine according to one of the claims 1 to 9, which includes the rotor (21) attached to a flywheel (56), which is rotatable about an axis of a crankshaft (51), in such a manner that the rotor (21) is not allowed to rotate relative to the flywheel (56) about the axis, and the stator (30) opposing the rotor (21) and attached to a case cover (19) in such a manner that the stator (30) is not allowed to rotate relative to the case cover (19) about the axis, wherein either one of the rotor (21) or the stator (30) is attached to the flywheel (56) or the case cover (19), in such a manner that the rotor (21) or the stator (30) is not allowed to move in the direction of the axis and the rest is allowed to move in the direction of the axis, and wherein the stator (30) has a support section supporting the rotor (21) in such a manner that the spacing distance between the stator (30) and the rotor (21) is fixed.

11. Engine coupled with the rotary electrical machine according to one of the claims 1 to 10.

12. Vehicle including the rotary electrical machine according to one of the claims 1 to 10.
